Europäisches Patentamt

European Patent Office

Office européen des brevets

(19)

(11) **EP 1 523 113 A1**

(12) **EUROPEAN PATENT APPLICATION**
published in accordance with Art. 158(3) EPC

(43) Date of publication:
**13.04.2005 Bulletin 2005/15**

(51) Int Cl.⁷: $H04B\ 7/26$, $H04B\ 17/00$

(21) Application number: **03741209.5**

(86) International application number:
**PCT/JP2003/008557**

(22) Date of filing: **04.07.2003**

(87) International publication number:
**WO 2004/008661 (22.01.2004 Gazette 2004/04)**

(84) Designated Contracting States:
**AT BE BG CH CY CZ DE DK EE ES FI FR GB GR
HU IE IT LI LU MC NL PT RO SE SI SK TR**

(30) Priority: **16.07.2002 JP 2002207307**

(71) Applicant: **NEC Corporation
Minato-ku, Tokyo 108-8001 (JP)**

(72) Inventor: **YONEYAMA, Yuzo,
c/o NEC CORPORATION
Tokyo 108-8001 (JP)**

(74) Representative: **Glawe. Delfs. Moll
Patentanwälte
Postfach 26 01 62
80058 München (DE)**

(54) **FAILURE DETECTING DEVICE**

(57) A base station (202) receives, from mobile stations ($203_1$ - $203_N$), notifications of transmission and reception powers thereof, which are input to a failure detecting part (218) together with the information about transmission and reception powers of the main device for the mobile stations. The failure detecting part (218) obtains upstream and downstream propagation losses of each one of propagation paths ($204_1$ - $204_N$). When the difference between those losses exceeds a predetermined tolerance, the failure detecting part (218) determines, based on such an exceeding difference, which one of the transmitters or receivers has a failure. In this way, there is no need to provide any special circuit for detecting a failure of a transmitter or receiver.

FIG. 1

**Description**

Background of the Invention

Generally, a failure of a transmitter can be readily detected by detecting, around the transmitter, transmission output power actually output from the transmitter and comparing the power of a transmitted input signal input to the transmitter with the transmission output power (Japanese Patent Laid-Open No. 2000-230737). On the other hand, a failure of a receiver is considered as follows. Although the reception power itself of the receiver can be detected by the output from the receiver, an input signal to the receiver is very weak, and the input timing of the signal is not accurately known. Therefore, it is generally impossible to detect input power to the receiver. Accordingly, a failure of the receiver cannot be detected by comparing the input and output powers as in the case of the transmitter.

Conventionally, therefore, a failure is detected by monitoring the current consumption of the receiver or a voltage (bias voltage) set for an amplifier in each stage of a circuit forming the receiver, and checking variations in current consumption or bias voltage.

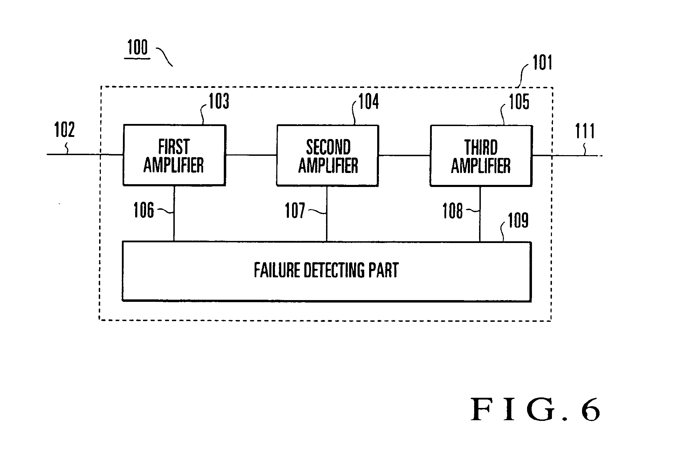

FIG. 6 shows an example of the circuit configuration of a conventional receiver failure detecting device. A receiver failure detecting device 100 includes first to third amplifiers 103 to 105 which input and sequentially amplify a reception signal 102 inside a receiver 101, and a failure detecting part 109 which inputs bias voltages 106 to 108 in predetermined portions (not shown) of the first to third amplifiers 103 to 105. An amplified reception output 111 is obtained from the third amplifier 105.

In the receiver failure detecting device 100 as described above, the failure detecting part 109 prestores the bias voltages 106 to 108 when the first to third amplifiers 103 to 105 are normal. While the receiver 101 is in operation, the failure detecting part 109 always checks whether the bias voltages are held within the normal range of the bias voltages 106 to 108, by using a circuit (not shown) which compares these voltages. If, as a result of this check, at least one of the bias voltages 106 to 108 falls outside the normal range at a certain time, the failure detecting part 109 determines that shortcircuit may have occurred or an obstacle such as disconnection or burning of a circuit component may have occurred in a portion of the first amplifiers 103 to 105, thereby detecting a failure.

In this failure detecting device, different amplifiers normally have different bias voltages to be monitored. Accordingly, a plurality of voltage comparators must be prepared.

Also, to accurately determine a failure, the voltages of as many circuit portions as possible of one amplifier must be checked. This increases the number of voltage comparators required for the failure detecting device, and increases the cost of the device.

Furthermore, to allow the failure detecting device to accurately operate, even if the individual components have variations in characteristics, the voltage of each part of the receiver must be adjusted within the range of predetermined values. For example, even if the amplification factor of the first amplifier 103 of the first to third amplifiers 103 to 106 shown in Fig. 6 increases, it is difficult to adjust the amplification factor of the whole by decreasing the amplification factor of the second amplifier 104 by an amount corresponding to this increase, and this makes flexible adjustment difficult, resulting in time-consuming receiver adjustment.

Summary of the Invention

It is an object of the present invention to provide a failure detecting device which requires no special circuit for detecting a failure of a transmitter or receiver.

A failure detecting device according to the present invention comprises (イ) notification receiving means for receiving, from at least one communication terminal of a communication partner, notification of both reception power of a signal transmitted from a main apparatus and transmission power of a signal transmitted to the main apparatus, (ロ) determining means for determining the reception power from the communication terminal and the transmission power to the communication terminal, (ハ) propagation loss calculating means for calculating bidirectional propagation losses between the communication terminal and main apparatus, from the two powers output from the notification receiving means and the two powers output from the determining means, (=) difference checking means for checking whether a difference between the propagation losses falls within a predetermined allowable range, and (ホ) failure determining means for determining that a transmitter/receiver of at least one of the communication terminal and main apparatus has a failure, if the difference checking means determines that the difference falls outside the allowable range.

Brief Description of Drawings

Fig. 1 is a system configuration view showing a communication system including a failure detecting device according to an embodiment of the present invention;

Fig. 2 is a view showing the relationship between four types of powers of a mobile station and base station in this embodiment;

Fig. 3 is a block diagram for explaining a failure detecting part of this embodiment;

Fig. 4 is a flowchart showing an outline of the flow of a failure detecting process used in the failure detecting part of this embodiment;

Fig. 5 is a flowchart showing details of a process of determining the presence/absence of a failure of a transmitter/ receiver in step S310 of Fig. 4; and

Fig. 6 is a block diagram showing an example of the circuit configuration of a conventional receiver failure detecting device.

Detailed Description of Preferred Embodiment

An embodiment of the present invention will be described in detail below.

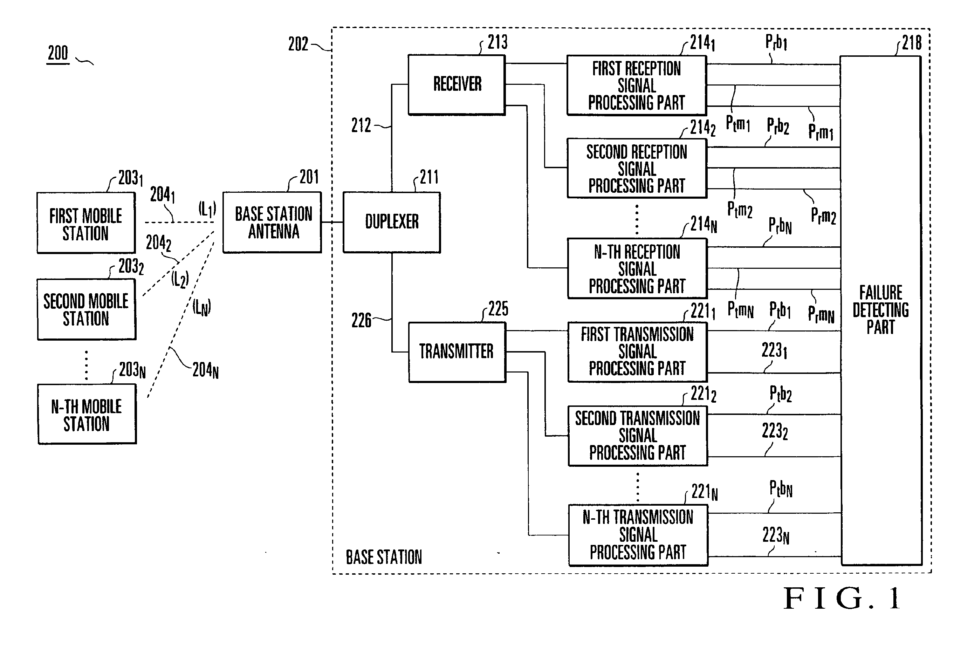

Fig. 1 shows a communication system including a failure detecting device according to the embodiment of the present invention. A communication system 200 includes a base station 202 having a base station antenna 201, and first to Nth mobile stations $203_1$ to $203_N$ which communicate with the base station 202 by a CDMA (Code Division Multiple Access) method.

First to Nth propagation paths $204_1$ to $204_N$ are formed when signals are exchanged between the base station antenna 201 and first to Nth mobile stations $203_1$ to $203_N$. The propagation losses of the first to Nth propagation paths $204_1$ to $204_N$ change in accordance with the arrangement environment, e.g., the positions of the first to Nth mobile stations $203_1$ to $203_N$. In this embodiment, however, these propagation losses are represented by first to Nth propagation losses $L_1$ to $L_N$.

The base station 202 has a duplexer 211 connected to the base station antenna 201. A reception signal 212 obtained from the base station antenna 201 is supplied through the duplexer 211, and input to and received by a receiver 213 connected to the duplexer 211. The output side of the receiver 213 is connected first to Nth reception signal processing parts $214_1$ to $214_N$ arranged in one-to-one correspondence with the first to Nth mobile stations $203_1$ to $203_N$.

The first to Nth reception signal processing parts $214_1$ to $214_N$ input mobile station transmission powers $P_t m_1$ to $P_t m_N$ and mobile station reception powers $P_r m_1$ to $P_r m_N$ to a failure detecting part 218 connected to the first to Nth reception signal processing parts $214_1$ to $214_N$.

From first to Nth transmission signal processing parts $221_1$ to $221_N$, the failure detecting part 218 receives base station transmission powers $P_t b_1$ to $P_t b_N$ corresponding to the first to Nth base stations $203_1$ to $203_N$. Also, if a failure occurs in any of the first to Nth mobile stations $203_1$ to $203_N$, the failure detecting part 218 outputs the corresponding one of first to Nth failure notification signals $223_1$ to $223_N$ to the corresponding one of the first to Nth mobile stations $203_1$ to $203_N$.

The first to Nth transmission signal processing parts $221_1$ to $221_N$ are connected to a transmitter 225. A transmission signal 226 output from the transmitter 225 is supplied to the base station antenna 201 via the duplexer 211, and transmitted from the base station antenna 201 to the first to Nth mobile stations $203_1$ to $203_N$ via the first to Nth propagation paths $204_1$ to $204_N$.

In the communication system 200 as described above, transmission signals from the first to Nth mobile stations $203_1$ to $203_N$ are received by the base station 202 via the base station antenna 201. The received signals are separated from the transmission signal 226 by the duplexer 211, and input as reception signals 212 to the receiver 213. The receiver 213 converts the reception signals 212, transmitted from the first to Nth mobile stations $203_1$ to $203_N$ and received by the base station 202, into a frequency which can undergo signal processing, and amplifies the converted signals to a predetermined power. The first to Nth reception signal processing parts $214_1$ to $214_N$ despread the amplified signals, and extract the mobile station signals transmitted from the mobile stations $203_1$ to $203_N$. The first to Nth reception signal processing parts $214_1$ to $214_N$ detect the reception powers of these extracted reception signals. The detected reception powers are represented by base station reception powers $P_r b_1$ to $P_r b_N$.

In the communication system 200, the first to Nth mobile stations $203_1$ to $203_N$ detect the transmission powers transmitted from them to the base station 202 and the reception powers of the transmission signal 226 transmitted from the base station 202, and transmit the detection results to the base station 202 when transmitting signals.

The first to Nth reception signal processing parts $214_1$ to $214_N$ demodulate and extract information about the mobile station transmission powers $P_tm_1$ to $P_tm_N$ and mobile station reception powers $P_rm_1$ to $P_rm_N$ transmitted from the first to Nth mobile stations $203_1$ to $203_N$. The first to Nth reception signal processing parts $214_1$ to $214_N$ supply, to the failure detecting part 218, the mobile station transmission powers $P_tm_1$ to $P_tm_N$ and mobile station reception powers $P_rm_1$ to $P_rm_N$ together with the base station reception powers $P_rb_1$ to $P_rb_N$.

Also, the base station 202 supplies, to the failure detecting part 218, the base station transmission powers $P_tb_1$ to $P_tb_N$ transmitted from the transmitter 225 via the first to Nth transmission signal processing parts $221_1$ to $221_N$.

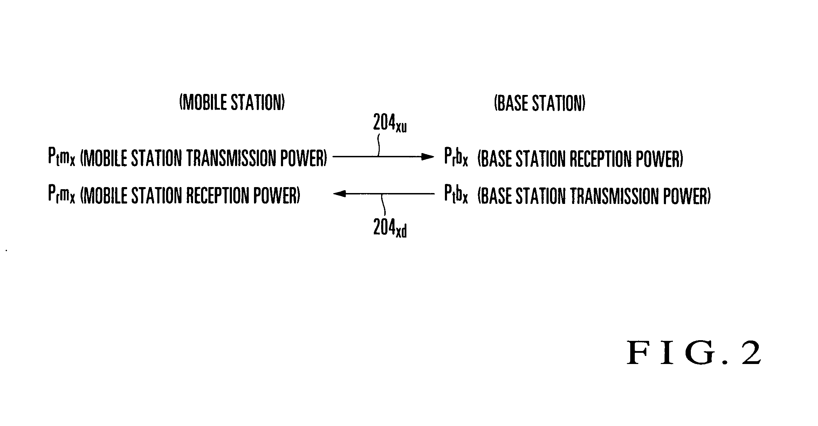

Fig. 2 shows the relationship between these four types of powers of the mobile station and base station. That is, Fig. 2 shows the relationship between an arbitrary mobile station X, an Xth upstream propagation path $204_{Xn}$, an Xth downstream propagation path $204_{Xd}$, and the base station.

The failure detecting part 218 shown in Fig. 1 calculates the propagation loss between the base station 202 and mobile station $203_X$ by using base station reception power $P_rb_X$, base station transmission power $P_tb_X$, mobile station transmission power $P_tm_X$, and mobile station reception power $P_rm_X$.

Also, the failure detecting part 218 compares the results of calculations by the first to Nth mobile stations $203_1$ to $203_N$. In this manner, the failure detecting part 218 detects a failure of the receiver 213 of the base station 202 or a failure of any of the mobile stations $203_1$ to $203_N$. This will be explained in detail later.

If the failure detecting part 218 detects a failure of any station, and if this failure concerns any of the first to Nth transmission signal processing parts $221_1$ to $221_N$, the base station 202 notifies the corresponding mobile station 203 of the failure.

This notification indicating that the failure is found is supplied from the failure detecting part 218 to the portion corresponding to the failure in any of the first to Nth transmission signal processing parts $221_1$ to $221_N$, and supplied to the transmitter 225. The transmitter 225 converts the notification into an RF signal by frequency conversion, and amplifies the signal to power necessary for transmission. The amplified signal is synthesized with the reception signal by the duplexer 211, and transmitted via the base station antenna 201. Consequently, the corresponding one of the first to Nth mobile stations $203_1$ to $203_N$ can receive the information indicating that the failure is found.

Details of the failure detecting part 218 will be described below.

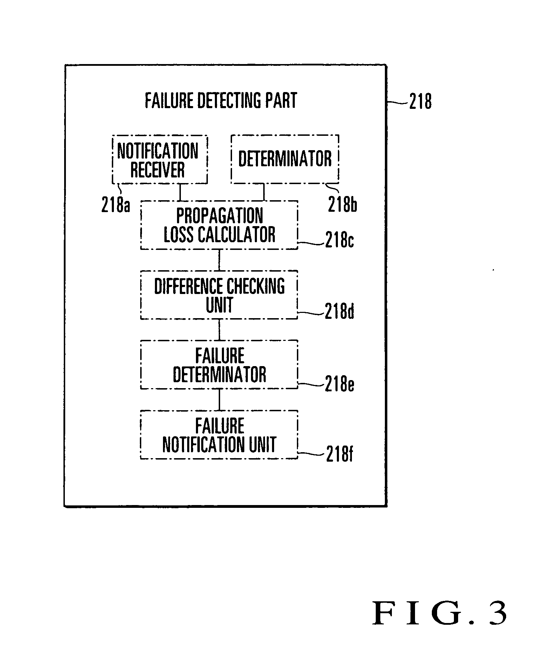

As shown in Fig. 3, the failure detecting part 218 includes a notification receiver 218a which receives the notification of the mobile station transmission power $P_tm_x$ and mobile station reception power $P_rm_x$ from the first to Nth mobile stations $203_1$ to $203_N$, and a determinator 218b which determines the base station reception power $P_rb_x$ and base station transmission power $P_tb_x$ extracted from the first to Nth reception signal processing parts $214_1$ to $214_N$.

The failure detecting part 218 also includes a propagation loss calculator 218c which is connected to the notification receiver 218a and determinator 218b, and calculates bidirectional propagation losses between the first to Nth mobile stations $203_1$ to $203_N$ and base station 202, from the mobile station transmission power $P_tm_x$ and mobile station reception power $P_rm_x$ input from the notification receiver 218a, and the base station reception power $P_rb_x$ and base station transmission power $P_tb_x$ input from the determinator 218b.

In addition, the failure detecting part 218 includes a difference checking unit 218d which is connected to the propagation loss calculator 218c, and checks, for each of the first to Nth mobile stations $203_1$ to $203_N$, whether the difference between the bidirectional propagation losses calculated by the propagation loss calculator 218c falls within an allowable range.

Furthermore, the failure detecting part 218 includes a failure determinator 218e which is connected to the difference checking unit 218d, and determines whether a failure has occurred in a mobile station and base station for which the difference checking unit 218d determines that the propagation loss difference falls outside the allowable range.

The failure detecting part 218 also includes a failure notification unit 218f which is connected to the failure determinator 218e, and notifies a mobile station and base station, found to have a failure by the failure determinator 218e, of the presence of the failure.

Assume that the mobile station transmission powers and mobile station reception powers of the N mobile stations $203_1$ to $203_N$ shown in Fig. 1 are as follows. In this state, all the mobile stations $203_1$ to $203_N$ are normally operating.

First mobile station

mobile station transmission power $P_tm_1$

= -40 dBm

mobile station reception power $P_rm_1$ = -30 dBm

Second mobile station

mobile station transmission power $P_tm_2$

= -20 dBm

mobile station reception power $P_rm_2$ = -40 dBm

.....

Nth mobile station

mobile station transmission power $P_tm_N$

= +10 dBm

mobile station reception power $P_rm_N$ = -60 dBm

Assume that in this state, the base station transmission powers and base station reception powers of the base station with respect to the mobile stations $203_1$ to $203_N$ are as follows. In this state, the base station is normally operating.

With respect to the first mobile station,

base station transmission power $P_tb_1$ = +20 dBm

base station reception power $P_rm_1$ = -90 dBm

With respect to the second mobile station,

base station transmission power $P_tb_2$ = +30 dBm

base station reception power $P_rb_2$ = -90 dBm

......

With respect to the Nth mobile station,

mobile station transmission power $P_tm_N$

= +40 dBm

mobile station reception power $P_rm_N$ = -90 dBm

In this example, the failure detecting part 218 can calculate the transmission losses of the transmission paths $204_1$ to $204_N$ between the base station 202 and mobile stations $203_1$ to $203_N$ by using the above measurement results by

Upstream signal propagation loss $L_{Xu}$

$= P_tm_X - P_rb_X$

Downstream signal propagation loss $L_{Xd}$

$= P_tb_X - P_rm_X$

$$\ldots (1)$$

where symbol X indicates an arbitrary transmission path.

Also, the propagation losses of the mobile stations $203_1$ to $203_N$ are calculated by

Upstream signal propagation loss of first

mobile station = downstream signal propagation

loss = 50 dB

Upstream signal propagation loss of second

mobile station = downstream signal propagation

loss = 70 dB

$$\ldots\ldots$$

Upstream signal propagation loss of Nth

mobile station = downstream signal propagation

loss = 100 dB

$$\ldots (2)$$

Normally, however, the frequencies of upstream and downstream signals in the same mobile station 203 are different. Therefore, the upstream and downstream signal propagation losses take different values. To simplify the explanation, in this example it is assumed that the downstream and upstream signal propagation losses are equal. However, the frequencies of upstream and downstream signals are known in practice. Accordingly, the upstream and downstream signal propagation losses of the same propagation path can be calculated. Correction of the propagation losses is also easy.

A case in which the receiver 213 of the base station 202 fails and as a consequence all the reception levels of the base station 202 lower by 10 dB will be explained below. In this state, all the first to Nth mobile stations $203_1$ to $203_N$ are normal. Under the assumption, all the reception powers from the first to Nth mobile stations $203_1$ to $203_N$ detected by the base station 202 lower by 10 dB. However, these reception powers are not always equal even when the receiver 213 of the base station 202 is normal. Therefore, it is impossible to determine, from information indicating the detected reception powers, whether the level of the receiver 225 has lowered or the input signal levels of signals transmitted from the first to Nth mobile stations $203_1$ to $203_N$ have lowered.

In this embodiment, to perform this determination, the propagation losses between the base station 202 and first to Nth mobile stations $203_1$ to $203_N$ are calculated. Equations (2) presented above are based on the assumption that the upstream and downstream signal propagation losses are equal. Accordingly, the propagation losses of the mobile stations $203_1$ to $203_N$ after the receiver 213 of the base station 202 has failed are indicated by

```
Upstream signal propagation loss of first

mobile station = 60 dB (+10 dB)

Downstream signal propagation loss of first

mobile station = 50 dB

Upstream signal propagation loss of second

mobile station = 80 dB (+10 dB)

Downstream signal propagation loss of second

mobile station = 70 dB

              ......

Upstream signal propagation loss of Nth

mobile station = 110 dB (+10 dB)

Downstream signal propagation loss of Nth

mobile station = 100 dB
```

$$...(3)$$

The comparison of equations (3) with equations (2) shows that in all the first to Nth mobile stations $203_1$ to $203_N$, the upstream signal propagation loss increases by 10 dB from the downstream signal propagation loss. Consequently, it is determined that the gain of the receiver 225 of the base station 202 lowers by 10 dB, i.e., the receiver 225 alone has failed.

Consider a case in which the receiver (not shown) of the first mobile station $203_1$ alone fails and as a consequence the gain lowers by 10 dB will be described below. In this state, the second to Nth mobile stations $203_2$ to $203_N$ and base station 202 are normal. In this case, the propagation losses of the mobile stations $203_1$ to $203_N$ are indicated by

```
Upstream signal propagation loss of first

mobile station = 50 dB

Downstream signal propagation loss of first

mobile station = 60 dB

Upstream signal propagation loss of second.

mobile station = downstream signal propagation

loss = 70 dB

           ......

Upstream signal propagation loss of Nth

mobile station = downstream signal propagation

loss = 100 dB

                              ...(4)
```

Consequently, it is determined by comparing equations (4) with equations (2) that the gain of the receiver of the first mobile station $203_1$ has lowered by 10 dB, i.e., the receiver of the first mobile station $203_1$ alone has failed.

Consider a case in which the gains of the base station 202 and first mobile station $203_1$ lower by 10 dB at the same time will be described below. In this state, all the second to Nth mobile stations $203_2$ to $203_N$ are normal. In this case, the propagation losses of the mobile stations $203_1$ to $203_N$ are indicated by

```
Upstream signal propagation loss of first

mobile station = 60 dB (+10 dB)

Downstream signal propagation loss of first

mobile station = 60 dB (+10 dB)

Upstream signal propagation loss of second

mobile station = 80 dB (+10 dB)

Downstream signal propagation loss of second

mobile station = 70 dB

        ......

Upstream signal propagation loss of Nth

mobile station = 110 dB (+10 dB)

Downstream signal propagation loss of Nth

mobile station = 100 dB
```

$$...(5)$$

where (+ 10dB) indicates the difference from equations (4). In equations (5) as shown above, the upstream and downstream signal propagation losses are equal only in the first mobile station $203_1$, and the upstream signal propagation loss is larger by 10 dB than the downstream signal propagation loss in all the second to Nth mobile stations $203_2$ to $203_N$.

Normally, the probability that some stations fail is much higher than the probability that all stations fail together. Since, therefore, the upstream signal propagation losses of all the mobile stations $203_1$ to $203_N$ lower by 10 dB, it is determined that the gain of the base station 202 has lowered by 10 dB. Then, it is possible to assume that the number of fault mobile stations is much smaller than the number of normal mobile stations, so it is determined that the gain of the receiver of the first mobile station $203_1$ has lowered by 10 dB.

In the failure detecting device of this embodiment, the base station 202 exclusively performs failure detection. Accordingly, the base station 202 can recognize the status of its own failures and those of the first to Nth mobile stations $203_1$ to $203_N$, but the first to Nth mobile stations $203_1$ to $203_N$ cannot recognize failures by themselves. Therefore, if, for example, the first mobile station $203_1$ alone has failed, the base station 202 outputs this information to the first transmission signal processing part $221_1$, and the transmitter 225 transmits the information to the first mobile station $203_1$. As a consequence, the first mobile station $203_1$ can recognize the failure of its own transmitter or receiver, and take a measure to correct the failure.

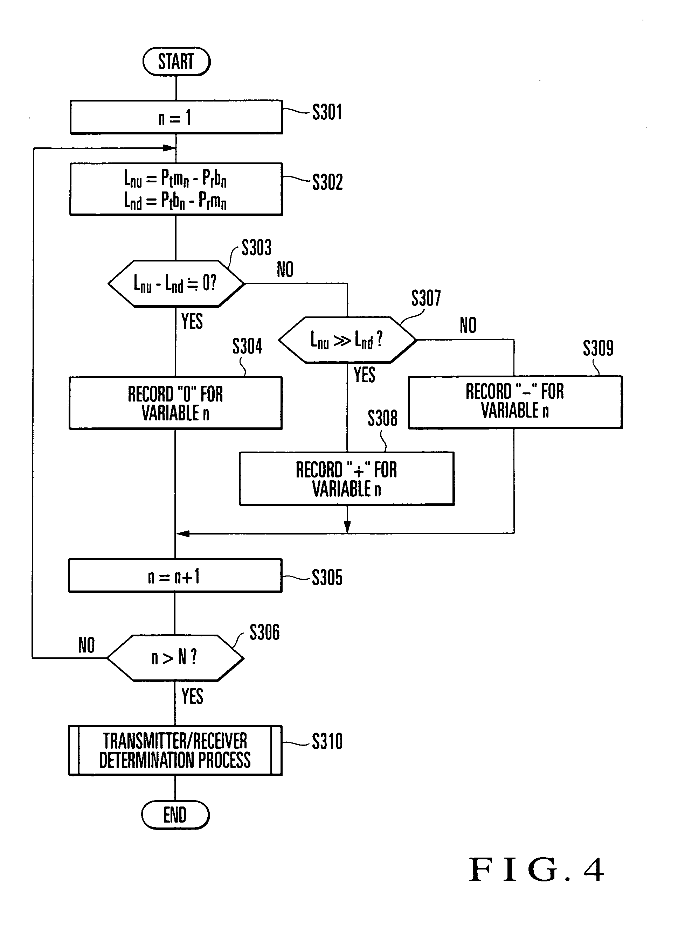

Fig. 4 shows an outline of the flow of a failure detecting process used in the failure detecting part according to this embodiment described above. The failure detecting part 218 shown in Fig. 1 has a CPU (Central Processing Unit, not shown), and executes the failure detecting process by executing a predetermined control program stored in a storage medium such as a ROM (Read Only Memory, not shown).

First, the failure detecting part 218 initializes a variable n to "1" (step S301). At the same time, the failure detecting part 218 clears the contents of a buffer (to be explained later). The propagation loss calculator 218c calculates an upstream signal propagation loss $L_{nu}$ and downstream signal propagation loss $L_{nd}$ of an nth mobile station $203_n$ by equations (1) (step S302). Since the variable n is "1", an operation indicated by equations (6) below is actually performed.

$$\text{Upstream signal propagation loss } L_{1u}$$

$$= P_t m_1 - P_r b_1$$

$$\text{Downstream signal propagation loss } L_{1d}$$

$$= P_t b_1 - P_r m_1$$

$$\ldots(6)$$

Then, the difference checking unit 218d checks whether the upstream and downstream signal propagation losses $L_{nu}$ and $L_{nd}$ calculated in step S302 fall within substantially equal ranges (step S303). Although the difference between the two is "0" in the above explanation, in this example it is assumed that the difference between the two is approximated to "0" if it falls within the range of $\pm 10$ dB. If the difference between the two is "0" (YES), "0" is recorded in that area of the buffer memory (not shown) where the variable n is "1", which corresponds to the first mobile station $203_1$ (step S304).

When this processing is complete, the variable n is counted up by "1" (step S305), and whether the variable n is larger than a total number "N" of the mobile stations $203_1$ to $203_N$ is checked (step S306). If the variable n is equal to or smaller than the total number "N", a mobile station 203 whose transmitter and receiver are to be checked still remains (NO). In this case, therefore, the flow returns to step S302 to proceed to processing for the second mobile station $203_2$.

On the other hand, if it is determined in step S303 that the upstream and downstream signal propagation losses $L_{nu}$ and $L_{nd}$ fall outside the allowable ranges, and if the upstream signal propagation loss $L_{nu}$ is larger than the downstream signal propagation loss $L_{nd}$ (step S307: YES), "+" is recorded in that portion of the buffer memory, which corresponds to the variable n (step S308). The flow then advances to the processing in step S305. Also, if it is determined in step S303 that the upstream and downstream signal propagation losses $L_{nu}$ and $L_{nd}$ fall outside the allowable ranges, and if the upstream signal propagation loss $L_{nu}$ is smaller than the downstream signal propagation loss $L_{nd}$ (step S307: NO), "-" is recorded in that portion of the buffer memory, which corresponds to the variable n (step S309). The flow then advances to the processing in step S305.

In this manner, whether the difference between the upstream and downstream signal propagation losses $L_{nu}$ and $L_{nd}$ is within the allowable range ("0"), larger than the allowable range ("+"), or smaller than the allowable range ("-") is checked for each of the first to Nth mobile stations $203_1$ to $203_N$ in order from the first mobile station $203_1$. If this check up to the Nth mobile station $203_N$ is complete in step S306 (YES), the failure determinator 218e determines the presence/absence of a failure in the base station 202 and first to Nth mobile stations $203_1$ to $203_N$ in accordance with the contents of the buffer memory (step S310).

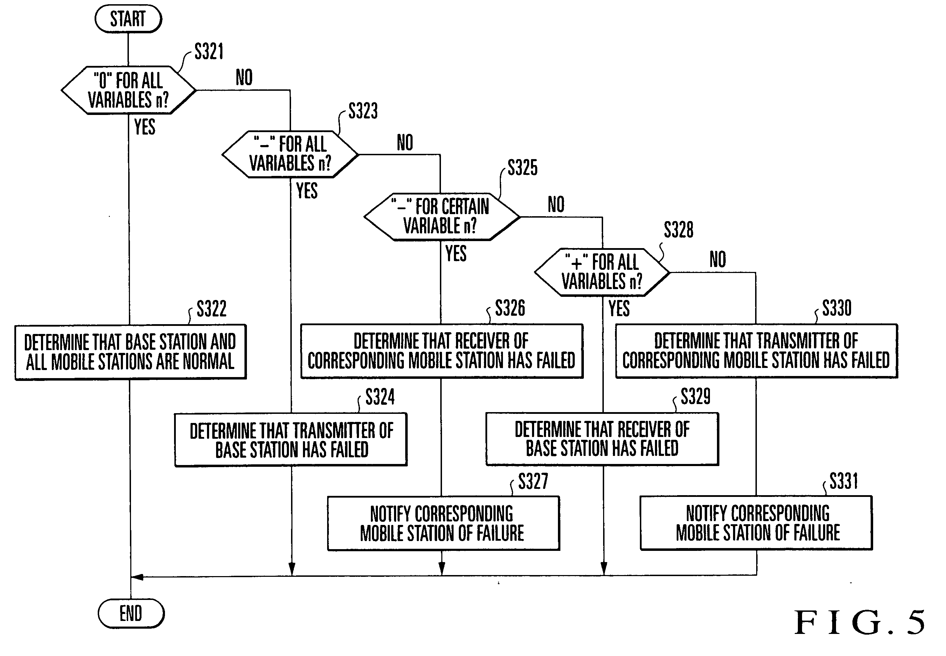

Fig. 5 shows details of the process of determining the presence/absence of a failure of the transmitter or receiver in step S310 of Fig. 4. First, if the difference between the upstream and downstream signal propagation losses $L_{nu}$ and $L_{nd}$ is found to fall within the allowable range ("0") for all the variables "1" to "n" stored in the buffer memory (step S321: YES), it is determined that the transmitters and receivers of all the base station 202 and first to Nth mobile stations $203_1$ to $203_N$ are normal (step S322).

Note that if the transmitters and receivers of all the base station 202 and first to Nth mobile stations $203_1$ to $203_N$ have failed, a phenomenon in which the difference between the upstream and downstream signal propagation losses $L_{nu}$ and $L_{nd}$ falls within the allowable range ("0") for all the first to Nth mobile stations $203_1$ to $203_N$ can occur. However, this embodiment does not assume such an extremely exceptional failure mode. Note also that as already described above, a failure of the transmitter of any of the base station 202 and first to Nth mobile stations $203_1$ to $203_N$ can be detected independently of the present invention. Therefore, failure determination can be performed more accurately by using the two methods at the same time, but this will not particularly be considered below.

If it is determined in step S321 that not all the variables n fall within the allowable range ("0") (NO), whether all the variables n are "+" is checked (step S323). If all the variables n are "+" (YES), the downstream transmission path propagation loss is larger than the upstream transmission path propagation loss in all the stations. This phenomenon can occur when the transmitter 225 of the base station 202 has failed, or when the receivers of all the first to Nth mobile stations $203_1$ to $203_N$ have failed. However, the possibility that the receivers of all the first to Nth mobile stations $203_1$ to $203_N$ fail at the same time is extremely low. In this case, therefore, it is determined that the transmitter 225 of the base station 202 has failed (step S324).

If some variables n are "+" (step S325: YES), it is determined that the receivers of mobile stations 203 found to be "+" have failed (step S326). In this case, when the base station 202 transmits a signal to the mobile stations 203 found to have failed, the failure notification unit 218f notifies that their receivers have failed (step S327). Consequently, each mobile station 203 having received this notification can recognize the occurrence of the failure by reproducing the notification by the receiver, and rapidly correct the failure.

If all the variables n fall outside the allowable range ("0") and at least some variables n are not "+" (step S323: NO, and step S325: NO), whether all the variables n are "-" is checked (step S328). If all the variables n are "-" (YES), it is determined that the receiver 213 (Fig. 1) of the base station 202 has failed (step S329).

Finally, a case in which some variables n are "-" (step S328: NO) will be explained below. In this case, it is determined that the transmitters of mobile stations whose variables n are "-" have failed (step S330). In this case, as in the above case, when the base station 202 transmits a signal to the mobile stations 203 found to have failed, these mobile stations are notified that their receivers have failed (step S331). Consequently, each mobile station 203 having received this notification can recognize the occurrence of the failure by reproducing the notification by the receiver, and rapidly correct the failure.

In the embodiment described above, a failure of the receiver or transmitter is detected by two-stage evaluation, i.e., by the presence/absence of a failure. However, the degrees of failures may also be more finely classified into, e. g., a failure by which the amplification factor only slightly increases or decreases, and a failure worse than that. Additionally, a failure of the transmitter is also determined in the embodiment. However, only a failure of the receiver can also be determined.

Although detection of a failure of a mobile station such as a cell phone is explained in the above embodiment, the present invention is, of course, also applicable to other radio apparatuses.

In the above-mentioned embodiment, a source apparatus, e.g., a base station receives, from a communication terminal of a communication partner with which the base station communicates, the notification of both the reception power of a signal transmitted by the source apparatus and the transmission power of a signal transmitted to the source apparatus, determines the reception power and transmission power of the source apparatus with respect to the communication terminal, and calculates bidirectional propagation losses between the communication terminal and source apparatus on the basis of these four types of data. The difference checking means checks whether the difference between the bidirectional propagation losses falls within a predetermined allowable range. If the transmitters/receivers of the two apparatuses are normal, the bidirectional propagation losses of one propagation path are equal or fall within the predetermined allowable range. Therefore, if the bidirectional propagation losses fall outside the allowable range, it is determined that either the communication terminal or source apparatus as the two ends of the propagation path has a failure. That is, by detecting the signal transmission power and reception power of each of the source apparatus and the communication terminal of the communication partner, the presence/absence of a failure of the transmitters/ receivers of these two apparatuses can be determined without using any special hardware.

Also, a failure of a source apparatus which communicates with a plurality of communication terminals can be detected. In this case, the source apparatus receives, from each of these communication terminals, the notification of the reception power of a signal transmitted by the source apparatus and the transmission power of a signal transmitted to the source apparatus, determines the reception power and transmission power of the source apparatus with respect to each of these communication terminals, and calculates bidirectional propagation losses between each communication terminal and the source apparatus on the basis of these four types of data. The difference checking means checks whether the difference between the bidirectional propagation losses falls within a predetermined allowable range. If the transmitters/receivers of the two apparatuses are normal, the bidirectional propagation losses of one propagation path are equal or fall within the predetermined allowable range. Therefore, for a pair of the source apparatus and a communication terminal by which the bidirectional propagation losses fall outside the allowable range, it is determined that either the communication terminal or source apparatus has a failure. It is also possible to perform more precise failure detection on the basis of the correlation with a plurality of communication terminals. That is, when communicating with a plurality of communication terminals, the source apparatus calculates propagation losses between these communication terminals and the source apparatus, and determines that a failure has occurred in the transmitter/receiver of one of a communication terminal and the source apparatus by which the difference between the bidirectional propagation losses falls outside the predetermined allowable range, so the presence/absence of a failure of these apparatuses can be determined without using any special hardware.

In addition, if the difference checking means determines that all the communication terminals fall outside the allowable range, all these communication terminals may have failed or the source apparatus may have failed. However, if the failure rates of the source apparatus and each communication terminal are equal, the probability that the source apparatus fails is higher than the probability that all the communication terminals fail. In this case, therefore, it is determined that the transmitter/receiver of the source apparatus has failed.

If the difference checking means determines that some communication terminals fall outside the allowable range, it is determined that failures have occurred in the transmitters/receivers of these communication terminals found to fall outside the allowable range.

Also, if it is determined that the transmitter/receiver of the source apparatus has failed, more precise failure determination is performed. That is, if the propagation loss of a propagation path to the source apparatus is smaller than that of a propagation path to each communication terminal, it is determined that the receiver of the source apparatus has failed. In the opposite case, it is determined that the transmitter of the source apparatus has failed. More specifically, if it is determined that a value obtained by subtracting the transmission power of the source apparatus with respect to a communication terminal from the reception power of the communication terminal is larger than a value obtained by subtracting the transmission power of the communication terminal from the reception power of the source apparatus with respect to the communication terminal, it is determined that the receiver of the source apparatus has failed. Otherwise, it is determined that the transmitter of the source apparatus has failed.

Likewise, if it is determined that the transmitter or receiver of the communication terminal has failed, more precise failure determination is performed. That is, if the propagation loss of a propagation path to the source apparatus is smaller than that of a propagation path to each communication terminal, it is determined that the transmitter of a communication terminal found to fall outside the allowable range has failed. Otherwise, it is determined that the receiver of the communication terminal found to fall outside the allowable range has failed. More specifically, determination is performed on the basis of the relationship between a value obtained by subtracting the transmission power of a communication terminal from the reception power of the source apparatus with respect to the communication terminal and a value obtained by subtracting the transmission power of the source apparatus with respect to the communication terminal from the reception power of the communication terminal.

Furthermore, although the source apparatus determines a failure, if the source apparatus determines that a communication terminal has failed, the source apparatus notifies the communication terminal of the failure. Accordingly, the corresponding communication terminal can recognize that its receiver or the like has failed, and take a necessary countermeasure.

As described above, the failure detecting device according to the present invention which detects a failure of a circuit apparatus such as a receiver is suited to detecting a failure of a receiver such as a base station receiver or a receiver of a mobile terminal.

**Claims**

1. A failure detecting device **characterized by** comprising:

   notification receiving means for receiving, from at least one communication terminal of a communication partner, notification of both reception power of a signal transmitted from a main apparatus and transmission power of a signal transmitted to said main apparatus;
   determining means for determining the reception power from said communication terminal and the transmission power to said communication terminal;
   propagation loss calculating means for calculating bidirectional propagation losses between said communication terminal and main apparatus, from the two powers output from said notification receiving means and the two powers output from said determining means;
   difference checking means for checking whether a difference between the propagation losses falls within a predetermined allowable range; and
   failure determining means for determining that a transmitter/receiver of at least one of said communication terminal and main apparatus has a failure, if said difference checking means determines that the difference falls outside the allowable range.

2. A failure detecting device according to claim 1, **characterized by** further comprising a plurality of communication terminals,
   wherein said notification receiving means

   receives, from each of said plurality of communication terminals of a communication partner, notification of both reception power of a signal transmitted from said main apparatus and transmission power of a signal transmitted to said main apparatus,
   said determining means determines, for each communication terminal, the reception powers from said plurality of communication terminals and the transmission powers to said plurality of communication terminals,
   said propagation loss calculating means calculates bidirectional propagation losses between each communication terminal and said main apparatus, from the two powers output from said notification receiving means and the two powers output from said determining means,
   said difference checking means checks whether a difference between the propagation losses falls within a predetermined allowable range, and
   said failure determining means determines that a transmitter/receiver of at least one of said communication terminal and main apparatus has a failure, if said difference checking means determines that the difference falls outside the allowable range.

3. A failure detecting device according to claim 2, **characterized in that** if said difference checking means determines that the difference falls outside the allowable range for all of said plurality of communication terminals, said failure determining means determines that a transmitter/receiver of said main apparatus has a failure.

4. A failure detecting device according to claim 2, **characterized in that** if said difference checking means determines that the difference falls outside the allowable range for some of said plurality of communication terminals, said failure determining means determines that a transmitter/receiver of each of said communication terminals, which is found to fall outside the allowable range has a failure.

5. A failure detecting device according to claim 3, **characterized in that** if it is determined that a propagation loss of a propagation path to said main apparatus is smaller than a propagation loss of a propagation path to each communication terminal, said failure determining means determines that a receiver of said main apparatus has failed, and, otherwise, said failure determining means determines that a transmitter of said main apparatus has failed.

6. A failure detecting device according to claim 4, **characterized in that** if it is determined that a propagation loss of a propagation path to said main apparatus is smaller than a propagation loss of a propagation path to each communication terminal, said failure determining means determines that a transmitter of a communication terminal found to fall outside the allowable range has failed, and, otherwise, said failure determining means determines that a receiver of a communication terminal found to fall outside the allowable range has failed.

7. A failure detecting device according to claim 1, **characterized in that** if it is determined that a propagation loss of a propagation path to said main apparatus is equal to a propagation loss of a propagation path to each communication terminal, said failure determining means determines that said communication terminal and main apparatus are normal.

8. A failure detecting device according to claim 1, **characterized by** further comprising failure notifying means for notifying said communication terminal of a detected failure.

FIG. 1

EP 1 523 113 A1

FIG. 2

FAILURE DETECTING PART ~218

NOTIFICATION RECEIVER | DETERMINATOR

218a | 218b

PROPAGATION LOSS CALCULATOR ~218c

DIFFERENCE CHECKING UNIT ~218d

FAILURE DETERMINATOR ~218e

FAILURE NOTIFICATION UNIT ~218f

FIG. 3

FIG. 4

FIG. 5

**S321** "0" FOR ALL VARIABLES n? — YES → **S322** DETERMINE THAT BASE STATION AND ALL MOBILE STATIONS ARE NORMAL

S321 NO → **S323** "−" FOR ALL VARIABLES n? — YES → **S324** DETERMINE THAT TRANSMITTER OF BASE STATION HAS FAILED

S323 NO → **S325** "−" FOR CERTAIN VARIABLE n? — YES → **S326** DETERMINE THAT RECEIVER OF CORRESPONDING MOBILE STATION HAS FAILED → **S327** NOTIFY CORRESPONDING MOBILE STATION OF FAILURE

S325 NO → **S328** "+" FOR ALL VARIABLES n? — YES → **S329** DETERMINE THAT RECEIVER OF BASE STATION HAS FAILED

S328 NO → **S330** DETERMINE THAT TRANSMITTER OF CORRESPONDING MOBILE STATION HAS FAILED → **S331** NOTIFY CORRESPONDING MOBILE STATION OF FAILURE

START

END

100

101

103

104

105

102

FIRST AMPLIFIER

SECOND AMPLIFIER

THIRD AMPLIFIER

111

106

107

108

109

FAILURE DETECTING PART

FIG. 6

**INTERNATIONAL SEARCH REPORT**

| International application No. |
|---|
| PCT/JP03/08557 |

**A. CLASSIFICATION OF SUBJECT MATTER**
Int.Cl⁷ H04B7/26, 17/00

According to International Patent Classification (IPC) or to both national classification and IPC

**B. FIELDS SEARCHED**

Minimum documentation searched (classification system followed by classification symbols)
Int.Cl⁷ H04B7/26, 17/00

Documentation searched other than minimum documentation to the extent that such documents are included in the fields searched

| | | | |
|---|---|---|---|
| Jitsuyo Shinan Koho | 1922–1996 | Toroku Jitsuyo Shinan Koho | 1994–2003 |
| Kokai Jitsuyo Shinan Koho | 1971–2003 | Jitsuyo Shinan Toroku Koho | 1996–2003 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 10-276127 A (NEC Saitama, Ltd.), 13 October, 1998 (13.10.98), Page 3, right column, line 24 to page 5, right column, line 15; Fig. 2 (Family: none) | 1-8 |

☐ Further documents are listed in the continuation of Box C. ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 06 October, 2003 (06.10.03) | 21 October, 2003 (21.10.03) |

| Name and mailing address of the ISA/ | Authorized officer |
|---|---|
| Japanese Patent Office | |
| Facsimile No. | Telephone No. |

Form PCT/ISA/210 (second sheet) (July 1998)